# EUROPÄISCHE PATENTSCHRIFT

(11) **EP 2 829 436 B1**
(45) Veröffentlichungstag und Bekanntmachung des Hinweises auf die Patenterteilung: **14.08.2019**
(21) Anmeldenummer: 14001311.1
(22) Anmeldetag: 10.04.2014
(51) Int. Cl.: B60N 2/24, B60Q 3/44, B60N 2/885, B60N 2/803, B60N 2/68, B60N 2/56, B60N 2/22, B61D 33/00

(54) **Fahrzeugsitz, insbesondere Fahrgastsitz für einen Bus**
Vehicle seat, in particular passenger seat for a bus
Siège de véhicule, notamment siège passager pour un bus

(30) Priorität: 24.07.2013 DE 102013012291
(43) Veröffentlichungstag der Anmeldung: 28.01.2015
(60) Teilanmeldung: 19169241.7
(73) Patentinhaber: MAN Truck & Bus SE, 80995 München (DE)
(72) Erfinder: Scherello, Michael, 81243 München (DE); Burmeister, Achim, 85232 Bergkirchen (DE)
(74) Vertreter: v. Bezold & Partner Patentanwälte - PartG mbB

(56) Entgegenhaltungen:
- EP-A1- 2 463 974
- WO-A1-03/089299
- WO-A1-2004/074095
- FR-A1- 2 374 185
- US-A- 1 750 873
- US-A- 3 323 835
- US-A- 3 827 752
- US-A- 5 836 547
- US-A1- 2003 111 888
- US-A1- 2006 103 211

## Beschreibung

Die Erfindung betrifft einen Fahrzeugsitz, insbesondere einen Fahrgastsitz für einen Bus, umfassend ein Sitzteil, eine Rückenlehne und eine Stützstruktur zur Aufnahme von Kräften, die auf den Fahrzeugsitz einwirken.

Aus dem Stand der Technik sind Fahrzeugsitze, insbesondere Kraftfahrzeugsitze, bekannt, die eine Rückenlehne aufweisen, gegen die sich der Fahrzeuginsasse mit seinem Rücken lehnen kann. Um der Rückenlehne der bekannten Fahrzeugsitze die notwendige Stabilität zu verleihen, so dass sie die auf den Fahrzeugsitz einwirkenden Kräfte sicher aufnehmen kann, sind in der Regel Stützstrukturen in die Rückenlehnen integriert. Derartige Kräfte können beispielsweise verursacht werden durch einen Aufprall eines dahinter sitzenden Fahrgastes auf die Rückenlehne gemäß den Prüfvorschriften für Omnibusse, durch Fahrgäste, die sich am Sitz bzw. daran befestigten Haltegriffen festhalten oder durch den sitzenden Passagier. In das Sitzteil können ebenfalls entsprechende Stützstrukturen integriert werden. Die bekannten Stützstrukturen weisen in der Regel einen metallischen Stützrahmen mit Längsträgern und Seitenstreben auf. Ein Beispiel einer derartigen Stützstruktur ist in der DE 10 2009 035 405 A1 offenbart.

Die vorstehend genannten Stützstrukturen haben den Nachteil, dass Rückenlehnen, in die derartige Stützstrukturen integriert werden müssen, aufwändig zu fertigen sind, ein relativ hohes Gewicht aufweisen und der zur Verfügung stehende Bauraum entsprechend begrenzt ist.

Zur Neigungsverstellung der Rückenlehne ist bei derartigen Fahrgastsitzen ein äußeres Drehgelenk zwischen Rückenlehne und Sitzpolster angebracht. Derartige Drehgelenke schränken jedoch den zur Verfügung stehenden Raumbereich, insbesondere die Kniefreiheit, für eine Person, die sich hinter dem Fahrzeugsitz befindet, ein. Darüber hinaus verhindern Sitzstrukturen, die sich innerhalb der Rückenlehne bzw. des Sitzträgers befinden, dass Ausstattungselemente nachträglich auf einfache Art an das Sitzgestell montiert werden können.

Ein weiterer Nachteil ist, dass eine Neigungsverstellung der Rückenlehne eine Winkeländerung z.B. eines an der Rückseite der Rückenlehne befestigten Tisches bewirkt. Um diese zu vermeiden, sind aus dem Stand der Technik Lösungen bekannt, die ein zusätzliches aufwändiges Gestell erfordern, um den Tisch von der Rückenlehne zu entkoppeln.

Aus der DE 10 2006 049 001 B4 ist ferner eine Sitzvorrichtung für ein Flugzeug bekannt, bei der eine Sitzeinrichtung auf einer Schalenstruktur, die gleichzeitig als geschlossener Stauraum dient, angeordnet ist. Die vorgeschlagene Schalenstruktur führt jedoch zu vergleichsweise großen Abmessungen der Sitzvorrichtung. In Linien- und Reisebussen ist jedoch der für einen Fahrzeugsitz verfügbare Aufstellplatz für eine derartige Schalenkonstruktion nicht ausreichend. Derartige Sitzvorrichtungen eignen sich daher in der Regel nicht für den Einbau in Linien- und Reisebusse, bzw. schränken den Raum der dahinter sitzenden Fahrgäste stark ein.

Eine weitere Sitzvorrichtung für ein Flugzeug ist in der Offenlegungsschrift US 2003/0111888 A1 bekannt, die einen Passagiersitz mit einer Stützstruktur offenbart, wobei die Sitzelemente entlang der Stützstruktur verschiebbar gelagert sind.

Aus der US 3 827 752 A ist eine weitere Sitzeinrichtung für ein Fahrzeug bekannt, bei dem der Sitz einen metallischen Stützrahmen umfasst, auf dem das Sitzpolster und das Rückenpolster befestigt sind. Der Stützrahmen besteht aus einem röhrenförmigen Stahlrahmen.

Aus der US 3 323 835 A ist ein Fahrzeugsitz bekannt, aufweisend ein Sitzgestell, auf dem ein Sitzpolster gehaltert ist und das das Sitzpolster außenseitig als Gestänge umgibt. Aus der US 1 750 873 A ist ferner eine Belüftungsvorrichtung bekannt, die teilweise in eine röhrenförmige Tragstruktur eines Sitzes integriert ist. Eine Aufgabe der Erfindung ist es, einen Fahrzeugsitz bereitzustellen, der Nachteile herkömmlicher Fahrzeugsitze vermeidet. Der Fahrzeugsitz soll insbesondere kompakte Abmessungen aufweisen und eine möglichst große Beinfreiheit, insbesondere für den Hintermann, ermöglichen. Eine weitere Aufgabe ist es, einen Fahrzeugsitz bereitzustellen, der die designtechnischen Gestaltungsmöglichkeiten bei der Ausgestaltung der Sitzpolsterung und der Anbringung von Ausstattungselementen verbessert.

Diese Aufgaben werden durch einen Fahrgastsitz mit den Merkmalen des Hauptanspruchs gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Der erfindungsgemäße Fahrzeugsitz weist in Übereinstimmung mit dem Stand der Technik ein Sitzteil und eine Rückenlehne auf. Das Sitzteil umfasst ein Sitzpolster, das auf einem Sitzpolsterträger starr angeordnet ist. Die Rückenlehne umfasst ein Rückenpolster, das auf einem Rückenpolsterträger starr angeordnet ist. Der Sitzpolsterträger und der Rückenpolsterträger werden nachfolgend auch als Polsterträger bezeichnet. Ferner umfasst der Fahrzeugsitz eine Stützstruktur zur Aufnahme von Kräften, die auf den Fahrzeugsitz einwirken.

Der Begriff Fahrzeugsitz umfasst Sitze für verschiedene Arten von Fahrzeugen, beispielsweise Landfahrzeuge, wie Straßen- oder Schienenfahrzeuge, Luftfahrzeuge oder Wasserfahrzeuge. Eine hervorgehobene Anwendung der Erfindung betrifft einen Fahrgastsitz für Busse, beispielsweise Reisebusse oder Nahverkehrsbusse.

Gemäß allgemeinen Gesichtspunkten der Erfindung ist die Stützstruktur als starres Traggestell gebildet, das außerhalb des Sitzteils und der Rückenlehne angeordnet ist. Das Traggestell ist umfangsseitig bzw. seitlich an dem Sitzteil und der Rückenlehne vorgesehen. Das Traggestell ist hierbei mit dem Sitzpolsterträger und dem Rückenpolsterträger verbunden, so dass diese von dem Traggestell gehalten werden. Ferner können dadurch Kräfte, die auf den Sitz einwirken, vom Traggestell aufgenommen werden.

Weiterhin weist das Traggestell paarweise angeordnete Tragschienen auf, die sich umfangseitig entlang gegenüberliegender Seitenkanten des Sitzteils und der Rückenlehne erstrecken. Diese umfangseitige Erstreckung umfasst dabei die Varianten, dass sich die Tragschienen lediglich abschnittweise entlang gegenüberliegender Seitenkanten des Sitzteils und/oder der Rückenlehne erstrecken oder auch entlang der gesamten Länge der Seitenkanten des Sitzteils und/oder der Rückenlehne.

Die Tragschienen des starren Traggestells können als Profilträger, Stangenelemente und/oder Tragrohre ausgebildet sein. Darüber hinaus kann das Traggestell in Teilbereichen mit zusätzlichen Elementen ausgestattet werden, um auftretende Kräfte zu übertragen. Ein starres Traggestell bedeutet in diesem Zusammenhang, dass das Traggestell ohne bewegliches Gelenk, insbesondere ohne Drehgelenk, ausgebildet ist, so dass sich das Traggestell bei einer Verschwenkung einer neigungsverstellbaren Rückenlehne nicht mitbewegt. Davon ausgenommen sind jedoch Gelenkmittel oder andere Kopplungselemente, um Fahrzeugsitzkomponenten am Traggestell zu befestigen, insbesondere Gelenkmittel zur Befestigung des Sitzpolsterträgers und des Rückenpolsterträgers.

Die erfindungsgemäße Stützstruktur ist somit nicht in die Rückenlehne oder das Sitzteil integriert, sondern sichtbar außerhalb der Polsterung angeordnet. Die auf den Fahrzeugsitz einwirkenden Kräfte werden von dem erfindungsgemäßen Traggestell aufgenommen. Folglich können die Träger für das Sitzpolster und die Rückenlehne die auf den Sitz einwirkenden Kräfte an das Traggestell ableiten und müssen nicht allein vollständig tragfähig ausgeführt werden. Damit entfällt die fertigungstechnisch aufwändige Integration eines schweren Traggestells in die Rückenlehne und/oder das Sitzteil, so dass diese Komponenten einfacher, mit reduziertem Gewicht und/oder aus alternativen Materialien hergestellt werden können.

Insbesondere der Rückenlehnenträger kann derart ausgeführt sein, dass ein Durchdrücken der Knie des Hintermanns verhindert wird. So sieht eine Möglichkeit der erfindungsgemäßen Realisierung beispielsweise vor, den Rückenpolsterträger als bauliche Einheit durch eine einstückige Schalenstruktur auszubilden. Ebenso kann der Sitzpolsterträger durch eine einstückige Schalenstruktur realisiert werden. Diese können aus Kunststoff oder einem Verbundwerkstoff in Leichtbauweise und mit geringer Dicke hergestellt werden. Es wird betont, dass das Sitzpolster und die Rückenlehne mehrstückig ausgebildet sein können, und insbesondere jeweils eine integrierte Federmatte sowie einen Sitzbezug aufweisen können. Der Sitzbezug kann dann sowohl nur das Polster, als auch Polster und Polsterträger umschließen. Insbesondere der Rückenlehnenträger kann rückseitig als Sichtfläche ausgeführt sein, d.h. derart, dass keine zusätzlichen Blenden o.ä. erforderlich sind. Darüber hinaus können entsprechende Sichtflächen zusätzlich mit weiteren Elementen ausgestatten werden, welche sowohl die optische Anmutung verbessern oder Vandalismus bzw. Gebrauchsspuren vorbeugen.

Durch das Vorsehen des Traggestells außerhalb des Sitzteils und der Rückenlehne ergeben sich ferner designtechnische Freiheitsgrade bei der Ausgestaltung des Traggestells, da dieses nun nicht mehr durch die Abmessungen des Sitzpolsters und der Rückenlehne beschränkt ist. So können beispielsweise Profile größeren Querschnitts verwendet und/oder alternative Materialien eingesetzt werden.

Erfindungsgemäß ist das Traggestell als Hohlstruktur ausgebildet. Dadurch kann ein stabiles Traggestell in Leichtbauweise bereitgestellt werden.

Ferner ist in die Hohlstruktur des Traggestells ein Lüftungs- und/oder Heizungselement integriert. Hierbei kann das Traggestell auf einer Rückseite des Fahrzeugsitzes Austrittsöffnungen bzw. Belüftungsdüsen mit einer Regelfunktion bzw. einem Regler für das Lüftungs- und/oder Heizungselement aufweisen. Dies hat den Vorteil, dass die Belüftung platzsparend in die Hohlstruktur des Sitzgestells integriert werden kann. Ferner wird eine bessere Bedienbarkeit für den Hintermann ermöglicht, da ein an der Rückseite des Vordersitzes angeordneter Regler bequemer erreichbar ist als Düsenbestecke, die an der Fahrzeugdecke angeordnet sind. Ein weiterer Vorteil ist, dass der Luftstrom von vorne anstatt von oben auf den Passagier geleitet wird.

Gemäß einer weiteren Variante dieser Ausgestaltungsform können auch Austrittsöffnungen des Lüftungs- und/oder Heizungselements auf einer Innenseite des Traggestells angeordnet sein, insbesondere entlang der paarweise angeordneten Tragschienen, derart, dass der austretende Luftstrom des Lüftungs- und/oder Heizungselements in das Sitzteil und/oder die Rückenlehne eingeleitet wird. Dies ermöglicht eine Erwärmung und/oder Kühlung der Rückenlehne bzw. des Sitzteils.

Ein hohlförmig ausgebildetes Traggestell wird vorteilhafterweise auch dazu genutzt, eine Kabelführung für ein am Fahrzeugsitz angeordnetes Beleuchtungselement oder eine Ladeeinrichtung für elektronische Mobilgeräte o.ä. in die Hohlstruktur des Traggestells zu integrieren.

Um das Traggestell optimal an die Sitzform anzupassen, weisen die paarweise angeordneten Tragschienen vorzugsweise jeweils einen ersten horizontalen Abschnitt auf, der sich entlang der Seitenkanten des Sitzteils erstreckt, und einen zweiten geneigten Abschnitt, der sich entlang der Seitenkanten der Rückenlehne erstreckt. Hierbei ist der zweite Abschnitt starr mit dem ersten Abschnitt verbunden. Ein Öffnungswinkel zwischen dem ersten Abschnitt und dem zweiten Abschnitt liegt im Bereich von 90 - 135 Grad, so dass sich der zweite Abschnitt des Traggestells, der entlang der Rückenlehne verläuft, schräg nach oben erstreckt.

In einem bevorzugten Ausführungsbeispiel ist die Rückenlehne neigungsverstellbar. Gemäß dieser Variante ist der Rückenpolsterträger zur Neigungsverstellung der Rückenlehne entlang der paarweise angeordneten Tragschienen linear verfahrbar angelenkt. Eine Möglichkeit der erfindungsgemäßen Realisierung sieht vor, dass der Rückenpolsterträger zur Neigungsverstellung der Rückenlehne über Schubgelenke an die Tragschienen angelenkt ist. Gemäß dieser Variante sind zur Neigungsverstellung der Rückenlehne somit keine die Beinfreiheit des Hintermanns einschränkenden Drehgelenke erforderlich.

Gemäß dieser Ausführungsvariante ist der Sitzpolsterträger zur Verstellung des Sitzteils ebenfalls entlang der Tragschiene linear verfahrbar angelenkt. Die Rückenlehne ist ferner schwenkbeweglich an das Sitzteil gekoppelt.

Der erfindungsgemäße Fahrzeugsitz ermöglicht somit eine Neigungsverstellung, die ausgehend von einer aufrechten Sitzposition mit zunehmender Neigung der Rückenlehne den Bewegungsraum, insbesondere die Beinfreiheit des Hintermanns, nicht einschränkt, sondern vielmehr vergrößert. Dies liegt daran, dass durch das Nach-vorne-Gleiten der Rückenlehne und des Sitzteils entlang der Tragschienen ein zusätzlicher Raumbereich auf Kniehöhe des Hintermanns eröffnet wird.

Vorzugsweise ist der Rückenpolsterträger zur Neigungsverstellung der Rückenlehne in einer Führungsnut der Tragschiene mit einem translatorischen und einem rotatorischen Freiheitsgrad durch ein Kopplungselement angelenkt. Der translatorische Freiheitsgrad entspricht der Linearbewegung der Polsterträger entlang der Führungsnut der Tragschiene. Der rotatorische Freiheitsgrad ermöglicht dem Kopplungselement den sich ändernden Öffnungswinkel zwischen der Rückenlehne und dem starren Traggestell bei einer Neigungsverstellung der Rückenlehne auszugleichen.

Gemäß einer weiteren Variante kann das Kopplungselement zwischen Rückenpolsterträger und Traggestell jedoch auch zusätzliche Freiheitsgrade ermöglichen.

Gemäß einer bevorzugten Ausgestaltungsform ist eine Kopfstütze, nachfolgend auch als Kopfteil bezeichnet, starr an dem Traggestell angeordnet. Eine Möglichkeit der erfindungsgemäßen Realisierung sieht vor, dass der Fahrzeugsitz durch eine Neigungsverstellung der Rückenlehne von einer oberen Sitzposition in eine untere Sitzposition bringbar ist, derart, dass die Rückenlehne in der oberen Sitzposition einen Teilbereich einer Innenfläche der Kopfstütze überdeckt und dass in der unteren Sitzposition der Teilbereich freigelegt ist. Mit anderen Worten gleitet die Rückenlehne und das Sitzteil bei einer Neigungsverstellung entlang der Führungsschienen nach unten, wobei die Rückenlehne einen zuvor bedeckten Bereich der Kopfstütze als zusätzliche Auflagefläche freigibt. Dadurch wird ein Mechanismus bereitgestellt, der es ermöglicht, die für den Passagier zur Verfügung stehende Auflagefläche zu verlängern. Dies ist besonders vorteilhaft für großgewachsene Fahrgäste, da Fahrzeugsitze in der Regel so dimensioniert sind, dass das obere Ende des Fahrgastsitzes bzw. das Kopfteil in aufrechter Sitzposition in der Regel im Nackenbereich großgewachsener Personen endet. Die verlängerte Auflagefläche in der unteren Sitzposition ermöglicht dann ein Ablegen des Kopfes des Passagiers.

Bei einer vorteilhaften Variante dieser Ausgestaltungsform ist die Kopfstütze so geformt, dass sie eine konkave Schüsselung aufweist. Die Kopfstütze umfasst vorteilhafterweise seitliche wangenförmige Sichtblenden zur Ausbildung einer seitlichen Kopfstütze. Diese dienen auch zur visuellen Abschottung eines Sitznachbars.

Gemäß einer bevorzugten Ausführungsform ist das Traggestell einstückig ausgebildet. Besonders bevorzugt ist eine Ausbildung des Traggestells als Aluminiumhohlprofil, das beispielsweise durch ein Streck-Biege-Verfahren hergestellt wurde.

Gemäß einer weiteren Variante kann das Traggestell aus mehreren verschiedenen Teilen zusammengefügt sein. Hierzu können verschiedene Profilträger miteinander verschweißt, verschraubt oder Spritzgussteile zusammengefügt werden. Gemäß einer weiteren Alternative können die Tragschienen in Schalenbauweise oder durch sogenannte "Tailored Blanks" hergestellt werden.

Ein weiterer Vorzug der Erfindung liegt darin, dass ein Tisch auf einer Rückseite des Fahrzeugsitzes am Traggestell angeordnet werden kann. Da das Traggestell sich bei einer Neigungsverstellung der Rückenlehne nicht mitbewegt, bewirkt eine Neigungsverstellung der Rückenlehne somit keine Neigung des Tisches. Dadurch kann auf aufwändige zusätzliche Gestelle verzichtet werden, die im Stand der Technik verwendet werden, um den Tisch von einer Bewegung der Rückenlehne zu entkoppeln.

Zur Aufnahme einer Aufprallenergie auf die Sitzrückseite kann in einem oberen Endbereich des Traggestells ein schockabsorbierendes Element angeordnet sein, beispielsweise in Form eines Styroporeinlegers. Alternativ kann auch die Stärke bzw. Dicke des Traggestells in diesem Abschnitt so ausgelegt sein, dass eine Aufprallenergie entsprechend absorbiert werden kann, beispielsweise verursacht durch den Aufprall des Kopfes des Hintermanns auf den Fahrgastsitz bei einem Frontcrash. Je nach Ausführungsform der Tragstruktur kann auch die Rückseite des Kopfteils zur Aufnahme/Absorption von Crashenergie ausgeführt sein; beispielsweise durch Vorsehen entsprechender Elemente/ Bereiche zur Aufnahme von Aufprallenergie.

Gemäß einem weiteren Aspekt kann ein Drei-Punkt-Sicherheitsgurt und eine Gurtumlenkeinrichtung am Traggestell befestigt sein. Hierbei ist der Gurtumlenker vorteilhafterweise in einer Nut am Traggestell derart gelagert und mit dem Sitzpolster gekoppelt, dass der Gurtumlenker bei einer Neigungsverstellung der Rückenlehne die Bewegung nach unten bzw. nach oben mitfährt.

Gemäß einer Ausführungsform kann die Tragstruktur in Teilbereichen hoher Beanspruchung hervorgerufen durch Fahrgäste, beispielsweise durch Festhalten, durch über das Traggestell rutschen oder auch aufgrund mutwilliger Beschädigung, mit zusätzlichen Schutzelementen ausgestattet werden, welche verhindern, dass übermäßige Verschleißspuren am sichtbaren Traggestell auftreten. Dies kann beispielsweise durch Folien, Gummierungen oder zusätzliche Kunststoffteile erreicht werden, welche nachträglich auf das Traggestell aufgebracht werden.

Vorzugsweise ist das Traggestell als geschlossenes Rahmengestell ausgebildet, das das Sitzteil und die Rückenlehne umfangseitig umschließt. Das Traggestell kann jedoch auch teilweise offen sein, insbesondere im Fußbereich des Sitzes. Hier kann das Traggestell beispielsweise mit einem Traggestell eines Nachbarsitzes starr verbunden werden.

Die Erfindung betrifft weiterhin eine Anordnung von Fahrzeugsitzen bestehend aus mindestens zwei der Fahrzeugsitze, wie vorstehend beschrieben. Gemäß diesem Ausführungsbeispiel sind die angeordneten Fahrzeugsitze über ein horizontales Verbindungselement bzw. eine Traverse miteinander verbunden. Das horizontale Verbindungselement kann hierbei starr an den Traggestellen der Sitze, vorzugsweise den horizontalen Abschnitten der Traggestelle, befestigt sein. Alternativ kann das horizontale Verbindungselement auch in eine Aussparung in dem horizontalen Abschnitt des Traggestells eingepasst sein. Dadurch können beispielsweise zwei nebeneinander angeordnete Fahrgastsitze eines Reisebusses auf konstruktiv einfache Weise als Einheit angeordnet werden. Eine weitere Variante dieser Ausführungsform sieht vor, dass einer von mindestens zwei derart angeordneten Fahrzeugsitzen entlang des horizontalen Verbindungselements verschiebbar gelagert ist, um beispielsweise den gangseitigen Sitz zum Gang hin verschieben zu können. Mit dem erfindungsgemäßen Traggestell für den Fahrzeugsitz kann dies auf sehr einfache Weise konstruktiv gelöst werden, indem beispielsweise an den benachbarten Traggestellen der nebeneinander angeordneten Fahrgastsitze entsprechende Durchgangsbohrungen angebracht werden, in denen eine horizontale Verfahrschiene starr angeordnet wird.

Gemäß einem weiteren Ausführungsbeispiel kann eine gangseitige Notbeleuchtung in das Traggestell integriert werden, beispielsweise, indem entsprechende Leuchtmittel, beispielsweise LEDs, ein Leuchtmittelband etc., am Traggestell befestigt werden. Ein weiterer Vorteil der vorgeschlagenen Sitzkonstruktion ist, dass der gesetzlich vorgeschriebene Haltegriff durch das die Sitzpolsterung umgebene Traggestell bereitgestellt werden kann. Hierzu kann im oberen Endbereich des Traggestells mindestens ein Abschnitt des Traggestells vorgesehen sein, dessen Durchmesser so bemessen ist, dass das Traggestell an dieser Stelle von einer Hand umgriffen werden kann, so dass das Traggestell als Griff verwendbar ist. Dadurch kann auf einen zusätzlichen Haltegriff verzichtet werden.

Weitere Einzelheiten und Vorteile der Erfindung werden im Folgenden unter Bezug auf die beigefügten Zeichnungen beschrieben. Es zeigen:
- Figur 1: eine schematische Explosionsansicht eines Fahrgastsitzes gemäß einem Ausführungsbeispiel der vorliegenden Erfindung;
- Figur 2: eine schematische Perspektivansicht eines Fahrgastsitzes in einer oberen Sitzposition gemäß einem Ausführungsbeispiel der vorliegenden Erfindung; und
- Figur 3: eine schematische Perspektivansicht eines Fahrgastsitzes in einer unteren Sitzposition gemäß einem Ausführungsbeispiel der vorliegenden Erfindung.

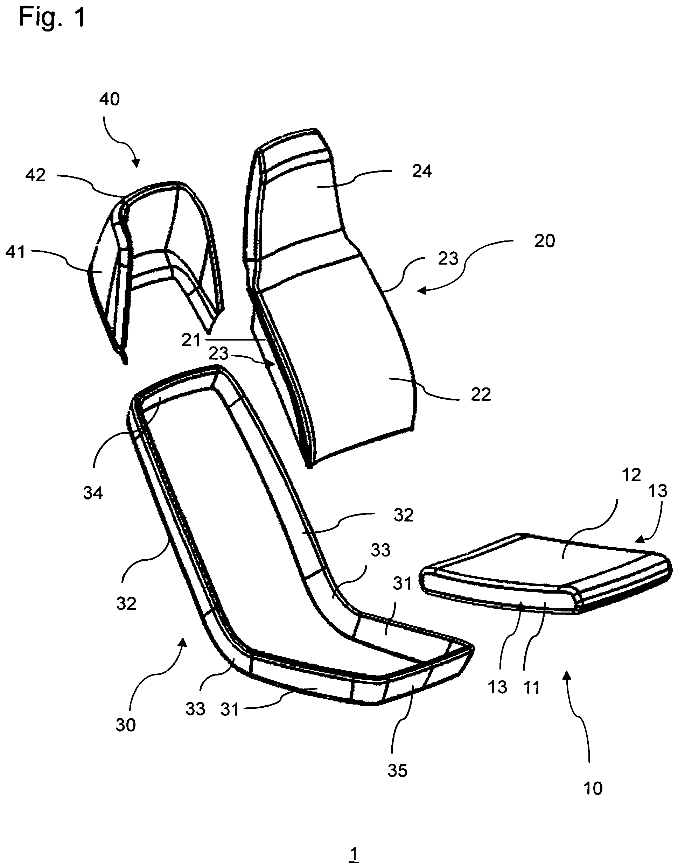

Figur 1 zeigt eine Explosionsdarstellung eines Ausführungsbeispiels des Fahrzeugsitzes, der als Fahrgastsitz 1 für einen Bus ausgebildet ist. Die Fahrgastsitzfläche wird durch ein Sitzteil 10 und durch eine Rückenlehne 20 gebildet. Das Sitzteil 10 weist ein Sitzpolster 12 auf, das auf einem Sitzpolsterträger 11 starr befestigt ist. Ebenso umfasst die Rückenlehne 20 ein Rückenpolster 22, das auf einem Rückenpolsterträger 21 befestigt ist. Zur Aufnahme und Fixierung des Sitzpolsters 12 und des Rückenpolsters 22 weisen die Polsterträger 11, 21 aus dem Stand der Technik bekannte Befestigungselemente (nicht gezeigt) auf, beispielsweise Klammern, Schnapphaken oder Befestigungsclips. Das Sitzteil 10 und die Rückenlehne 20 sind mehrteilig bzw. mehrlagig ausgebildet und enthalten beispielsweise jeweils eine Federmatte und sind mit einem Polsterüberzug versehen.

Im Gegensatz zu den aus dem Stand der Technik bekannten Fahrgastsitzen ist es nicht unbedingt erforderlich in das Sitzteil und die Rückenlehne weitere Rahmenkonstruktionen, beispielsweise in Form eines Stahlgerüsts, einzuarbeiten, um als Stützstruktur die auf den Fahrzeugsitz 1 einwirkenden Kräfte aufnehmen zu können. Stattdessen weist der Fahrzeugsitz 1 ein starres Traggestell 30 auf, das außerhalb des Sitzteils 10 und außerhalb der Rückenlehne 20 umfangseitig angeordnet ist und das mit dem Sitzpolsterträger 11 und dem Rückenpolsterträger 21 in Verbindung steht. Das Traggestell 30 ist somit sichtbar und wird nicht durch Polsterelemente oder durch den Polsterüberzug verdeckt. Dennoch kann es auch bei Verwendung des erfindungsgemäßen Traggestells vorteilhaft sein in der Rückenlehne oder im Sitzteil zusätzliche Stützelemente einzubringen, insbesondere in Teilbereichen der Schubgelenkaufnahme oder im Kniebereich des Hintermanns.

Im vorliegenden Ausführungsbeispiel ist das Traggestell 30 als geschlossenes Rahmengestell ausgebildet, das das Sitzteil und die Rückenlehne 20 umfangseitig umschließt. Hierbei besteht das Traggestell 30 aus umlaufenden Tragschienen 31, 32, 33, 34, 35, die aus einem Aluminiumhohlprofil hergestellt sind. Das Traggestell 30 kann hierbei einteilig durch ein Streck-Biege-Verfahren hergestellt sein. Das Traggestell 30 weist paarweise angeordnete Tragschienen 31 auf, die sich entlang gegenüberliegender Seitenkanten 13 des Sitzteils 10, insbesondere des Sitzpolsterträgers 11, erstrecken. Ferner umfasst das Traggestell 30 paarweise angeordnete Tragschienen 32, die sich entlang gegenüberliegender Seitenkanten 23 der Rückenlehne 20, insbesondere des Rückenlehnenpolsterträgers 21, erstrecken. Die Tragschienen 31 sind mit den Tragschienen 32 über starre, gekrümmte Verbindungsschienen 33 verbunden. Der Öffnungswinkel zwischen den horizontalen Tragschienen 31 und den schräg nach oben geneigten Tragschienen 32 beträgt circa 110 Grad. Je nach gewünschter Sitzform können auch andere Öffnungswinkel durch entsprechende Biegung oder Formung des Traggestells 30 hergestellt werden. Das Traggestell 30 ist starr und weist somit keine Drehgelenke auf.

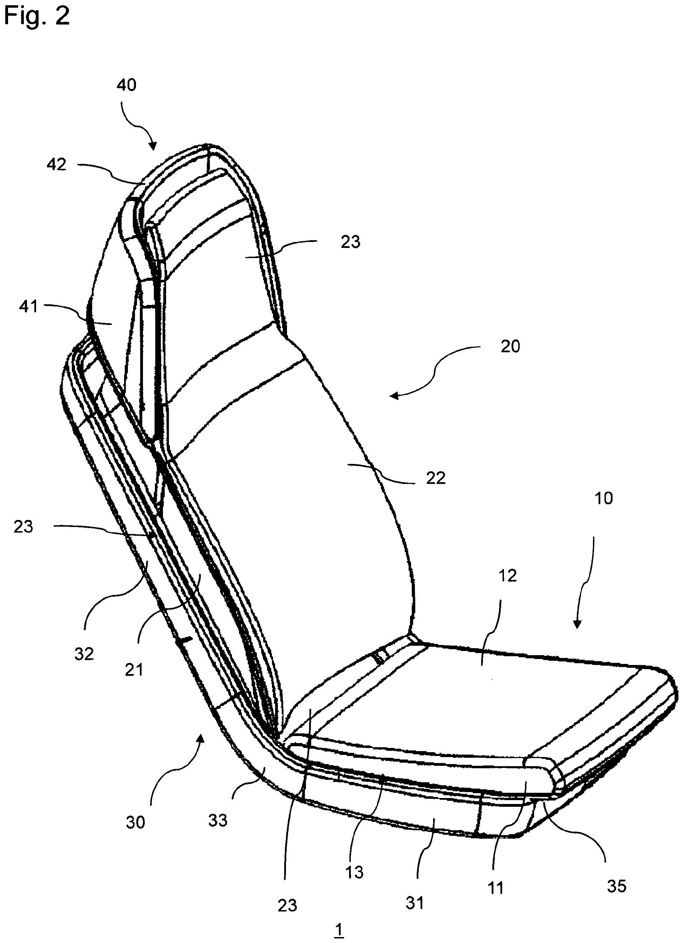

Figur 2 zeigt einen Fahrgastsitz in montiertem Zustand. Der Rückenpolsterträger 21 und der Sitzpolsterträger 11 sind zur Neigungsverstellung der Rückenlehnen 20 entlang der seitlichen Tragschienen 31, 32, 33 verfahrbar angelenkt. Der Gelenkmechanismus ist in den Figuren nicht dargestellt. Dieser kann wie folgt realisiert werden. Gemäß dem vorliegenden Ausführungsbeispiel weist die Innenseite der Tragschienen 31, 32, 33 eine Führungsnut auf, in die entsprechende Gegenstücke eingreifen, die an den Seitenkanten der Rückenpolsterträger 21 und des Sitzpolsterträgers 11 befestigt sind. Das Gegenstück kann beispielsweise als Nippel ausgebildet sein, der in der Führungsschiene verfahrbar angelenkt ist mit einem translatorischen Freiheitsgrad zum Verfahren entlang der Führungsschiene und einem rotatorischen Freiheitsgrad zum Ausgleich der Neigung des Rückpolsterträgers 21 gegenüber dem starren Traggestell 20. Die Sitzpolsterträger 11 und der Rückenpolsterträger 21 sind jeweils als bauliche Einheit durch eine einstückige Schalenstruktur gebildet. In diesem Fall sind die Führungsnippel, die in die Verfahrschienen eingreifen, vorteilhafterweise an die durch Spritzguss hergestellten Schalen angeformt.

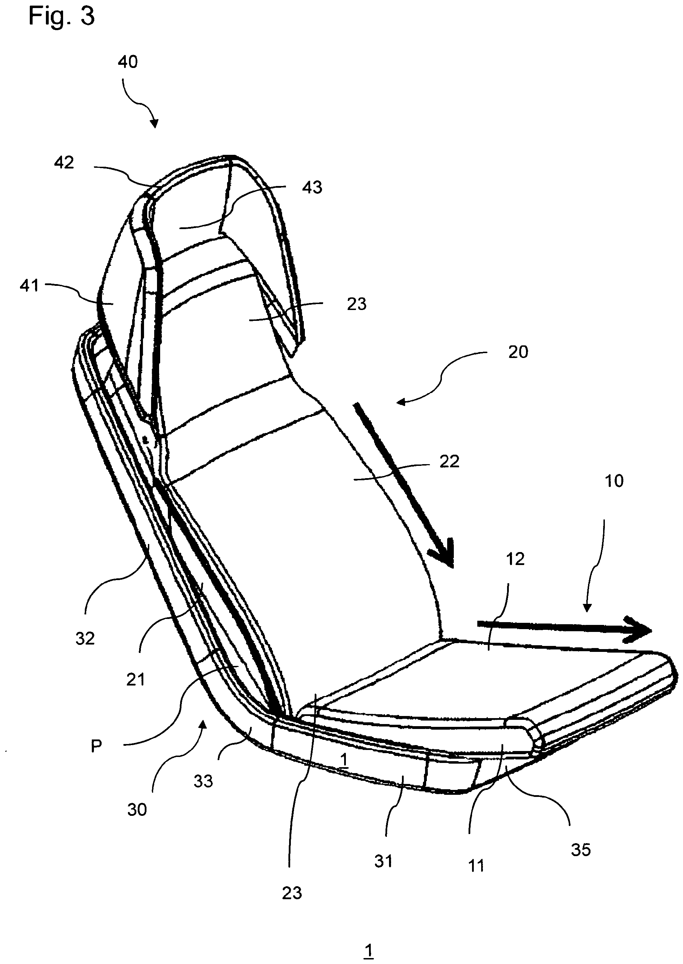

In Figur 3 ist der Fahrzeugsitz in einer unteren Sitzposition gezeigt, in der die Rückenlehne 20, wie durch den schwarzen dicken Pfeil gekennzeichnet, nach unten verfahren ist. Gleichzeitig ist das Sitzteil 10 nach vorne entsprechend der angezeigten Pfeilrichtung verschoben. Zusätzlich zu der gekennzeichneten Richtung kann das Sitzteil in einer Ausführungsform aber auch in eine schräge, vorzugsweise nach oben gerichtete Richtung, verschoben werden, derart, dass sich z.B. das vordere Ende des Polsters nach oben bzw. das hintere Ende nach unten bewegt. Entsprechend muss die Bewegung des Sitzteils nicht zwangsläufig horizontal verlaufen. Durch die Verfahrung der Rückenlehne 20 ändert sich der Neigungswinkel der Rückenlehne 20. Zur Neigungsverstellung ist die Rückenlehne 20 in dem Verbindungsbereich 25 an das Sitzteil 10 schwenkbeweglich gekoppelt. Das Traggestell 30 ist als Hohlstruktur ausgebildet, so dass im Inneren Elemente eines Lüftungs- und/oder Heizungselements integriert werden können, wie vorstehend beschrieben.

Ferner ist eine Kopfstütze 40 starr an dem Traggestell 30 angeordnet. Bei einer Neigungsverstellung des Sitzes 1 von einer oberen Position in eine untere Position bewegt sich die Kopfstütze 40 somit nicht mit. Die Kopfstütze 40 weist einen Innenbereich 43 auf, der an die obere Umlaufkante 42 der Kopfstütze angrenzt und in der oberen Sitzposition (Fig. 2) von dem oberen Abschnitt 24 der Rückenlehne 20 zumindest teilweise bedeckt ist, aber in der unteren Sitzposition (Fig. 3) freigelegt ist. Dadurch kann die Auflagefläche des Sitzes 1 verlängert werden und ein zusätzlicher Auflagebereich an dem Innenbereich 43 zum Anlegen des Kopfes freigegeben werden.

Ein weiterer Vorteil der vorliegenden Sitzkonstruktion ist, dass bei einer Rückenlehnenverstellung von der oberen in die untere Position ein zusätzlicher Raumbereich hinter der Rückenlehne 20 im Bereich P freigegeben wird, so dass durch eine Rückenlehnenverstellung der Raumbereich für den Hintermann nicht eingeschränkt wird, sondern im Kniebereich vergrößert wird.

Die Kopfstütze 40 weist eine konkave Schüsselung auf, mit seitlichen Wangen 41, die als seitliche Kopfstütze und zur visuellen Abschottung von einem Sitznachbar dienen. In der unteren Sitzposition wird die Sitzposition des Fahrgastes so weit abgesenkt, dass in der Regel der Kopf innerhalb der seitlichen Wangen 41 positioniert wird.

Die Kopfstütze 40 kann als auch als multifunktionales Kopfmodul ausgebildet sein. Der konstruktive Ansatz der vorliegenden Erfindung erlaubt es, einen standardisierten Fahrzeugsitz 1 ohne das Kopfmodul bereitzustellen, der durch verschiedene Ausgestaltungen des Kopfmoduls an unterschiedliche Kundenwünsche angepasst werden kann. So kann die Kopfstütze 40 als Komfortkopfstütze mit unterschiedlichen Polsterungsvarianten oder Größenabmessungen ausgebildet sein. Ferner kann das Kopfteil mit einem integrierten USB-Anschluss, einem Monitor, Beleuchtungselementen und/oder Lautsprechern, insbesondere mit einer aktiven Lärmkompensation (Noise-Cancelling-Funktion), versehen sein. Dadurch können unterschiedliche Ausgestaltungsvarianten mit einem hohen Standardisierungsgrad umgesetzt werden, da jeweils nur das Kopfmodul angepasst werden muss.

Ein weiterer Vorteil ist, dass sich das Traggestell in besonderer Weise eignet, eine gangseitige Notbeleuchtung in Form eines Leuchtmittelbandes, LEDs oder anderer Leuchtmittel daran zu befestigen (nicht gezeigt). Derartige Leuchtmittel können an den Stoffbezügen herkömmlicher Sitzkonstruktionen nicht ohne Weiteres befestigt werden.

### Bezugszeichenliste

- 1: Fahrgastsitz
- 10: Sitzteil
- 11: Sitzpolsterträger
- 12: Sitzpolster
- 13: Seitenkante des Sitzpolsters
- 20: Rückenlehne
- 21: Rückenpolsterträger
- 22: Rückenpolster
- 23: Seitenkante des Rückenpolsterträgers
- 24: oberer Endbereich der Rückenlehne
- 25: Verbindungsabschnitt von Rückenpolster und Sitzpolster
- 30: Traggestellt
- 31-35: Tragschienen des Traggestells
- 40: Kopfstütze
- 41: Seitenwange der Kopfstütze
- 42: obere Umlaufkante der Kopfstütze
- 43: Teilbereich einer Innenfläche der Kopfstütze

## Patentansprüche

1. Fahrzeugsitz (1), insbesondere Fahrgastsitz für einen Bus, mit:
a) einem Sitzteil (10), umfassend einen Sitzpolsterträger (11) und ein Sitzpolster (12), das auf dem Sitzpolsterträger (11) starr angeordnet ist;
b) einer Rückenlehne (20), umfassend einen Rückenpolsterträger (21) und ein Rückenpolster (22), das auf dem Rückenpolsterträger (21) starr angeordnet ist;
c) einer Stützstruktur zur Aufnahme von Kräften, die auf den Fahrzeugsitz einwirken; wobei
d) die Stützstruktur als starres Traggestell (30) gebildet ist, das außerhalb des Sitzteils (10) und der Rückenlehne (20) umfangseitig angeordnet ist und das mit dem Sitzpolsterträger (11) und dem Rückenpolsterträger (21) in Verbindung steht, und
e) das paarweise angeordnete Tragschienen (31, 32) aufweist, die sich entlang gegenüberliegender Seitenkanten (13, 23) des Sitzteils (10) und der Rückenlehne (20) erstrecken, und
f) das Traggestell (30) als Hohlstruktur ausgebildet ist
**dadurch gekennzeichnet,**
g1) dass in die Hohlstruktur des Traggestells (30) ein Lüftungs- und/oder Heizungselement integriert ist und dass Austrittsöffnungen des Lüftungs- und/oder Heizungselements auf einer Innenseite des Traggestells (30) angeordnet sind, derart, dass dadurch eine Erwärmung und/oder Kühlung der Rückenlehne (20) bzw. des Sitzteils (10) ermöglicht wird; und/oder
g2) dass eine Kabelführung für ein am Fahrzeugsitz angeordnetes Beleuchtungselement oder für eine Ladeeinrichtung für elektronische Mobilgeräte in die Hohlstruktur des Traggestells (30) integriert ist.

2. Fahrzeugsitz nach Anspruch 1, **dadurch gekennzeichnet, dass** der Sitzpolsterträger (11) und/oder der Rückenpolsterträger (21) jeweils als bauliche Einheit durch eine einstückige Schalenstruktur gebildet sind.

3. Fahrzeugsitz nach einem der vorhergehenden Ansprüche, **dadurch gekennzeichnet,**
a) **dass** das Traggestell (30) als geschlossenes Rahmengestell ausgebildet ist, das das Sitzteil (10) und die Rückenlehne (20) umfangseitig umgibt; und/oder
b) **dass** die paarweise angeordneten Tragschienen (31, 32) jeweils einen ersten horizontalen Abschnitt (31) aufweisen, der umfangseitig an den Seitenkanten (13) des Sitzteils (10) angeordnet ist, und einen zweiten geneigten Abschnitt (32) aufweisen, der umfangseitig an den Seitenkanten (23) der Rückenlehne (20) angeordnet ist, wobei der zweite Abschnitt (32) starr mit dem ersten Abschnitt (31) verbunden ist und ein Öffnungswinkel zwischen dem ersten Abschnitt und dem zweiten Abschnitt im Bereich von 90° bis 135° liegt.

4. Fahrzeugsitz nach einem der vorhergehenden Ansprüche, **dadurch gekennzeichnet, dass** das Traggestell (30) einstückig ausgebildet ist.

5. Fahrzeugsitz nach einem der vorhergehenden Ansprüche, **dadurch gekennzeichnet, dass** das Traggestell (30) in einem oberen Endbereich (34) ein schockabsorbierendes Element aufweist zur Aufnahme einer Aufprallenergie.

6. Fahrzeugsitz nach einem der vorhergehenden Ansprüche, **dadurch gekennzeichnet,**
a) **dass** der Rückenpolsterträger (21) zur Neigungsverstellung der Rückenlehne (20) entlang der paarweise angeordneten Tragschienen (32) verfahrbar angelenkt ist; und/oder
b) **dass** für eine Verstellung des Sitzteils (10) der Sitzpolsterträger (11) entlang der Tragschienen (31) verfahrbar angelenkt ist; und/oder
c) **dass** die Rückenlehne (20) schwenkbeweglich an das Sitzteil (10) gekoppelt ist.

7. Fahrzeugsitz nach einem der vorhergehenden Ansprüche, **dadurch gekennzeichnet, dass** die Rückenlehne (20) neigungsverstellbar ist, wobei der Rückenpolsterträger (21) zur Neigungsverstellung der Rückenlehne (20) über Schubgelenke an die Tragschienen (32) angelenkt ist.

8. Fahrzeugsitz nach einem der vorhergehenden Ansprüche, **dadurch gekennzeichnet, dass** der Rückenpolsterträger (21) zur Neigungsverstellung der Rückenlehne (20) in einer Führungsnut der Tragschienen (32) mit einem translatorischen und einem rotatorischen Freiheitsgrad angelenkt ist.

9. Fahrzeugsitz nach einem der vorhergehenden Ansprüche, **gekennzeichnet durch** eine Kopfstütze (40), die starr an dem Traggestell (30) angeordnet ist.

10. Fahrzeugsitz nach Anspruch 9, **dadurch gekennzeichnet, dass** der Fahrzeugsitz (1) durch eine Neigungsverstellung der Rückenlehne (20) von einer oberen Sitzposition in einer untere Sitzposition bringbar ist, derart, dass die Rückenlehne (20) in der oberen Sitzposition einen Teilbereich (43) einer Innenfläche der Kopfstütze (40) überdeckt und in der unteren Sitzposition der Teilbereich (43) freigelegt ist.

11. Fahrzeugsitz nach Anspruch 9 oder 10, **dadurch gekennzeichnet, dass** die Kopfstütze seitliche Sichtblenden aufweist zur Ausbildung einer seitlichen Kopfstütze und einer visuellen Abschottung eines Sitznachbars.

12. Fahrzeugsitz nach einem der vorhergehenden Ansprüche, **dadurch gekennzeichnet, dass** ein Tisch auf einer Rückseite des Fahrzeugsitzes (1) am Traggestell (30) angeordnet ist.

13. Fahrzeugsitz nach einem der vorhergehenden Ansprüche, **gekennzeichnet durch** einen 3-Punkt-Sicherheitsgurt und eine Gurtumlenkeinrichtung, die am Traggestell befestigt sind.

14. Fahrzeugsitz nach einem der vorhergehenden Ansprüche, **dadurch gekennzeichnet,**
a) **dass** das Traggestell (30) als hohlförmiges Aluminium-Stangenelement ausgebildet ist; und/oder
b) **dass** das Sitzpolster (10) und die Rückenlehne (20) einen Polsterüberzug umfassen.

15. Anordnung von Fahrzeugsitzen, wobei mindestens zwei der Fahrzeugsitze (1) gemäß einem der vorhergehenden Ansprüche zueinander ausgerichtet angeordnet sind, wobei die angeordneten Fahrzeugsitze über ein horizontales Verbindungselement miteinander verbunden sind, das starr mit dem Traggestell (30) verbunden ist und/oder das in eine Aussparung in einem horizontalen Abschnitt (31) des Traggestells (30) eingepasst ist.

16. Anordnung von Fahrzeugsitzen nach Anspruch 15, **dadurch gekennzeichnet, dass** einer der mindestens zwei Fahrzeugsitze (1) entlang des horizontalen Verbindungselements verschiebbar gelagert ist.

## Claims

1. Vehicle seat (1), in particular a passenger seat for a bus, having:
(a) a seat member (10), comprising a seat upholstery carrier (11) and seat upholstery (12), which is rigidly arranged on the seat upholstery carrier (11);
(b) a backrest (20), comprising a back upholstery carrier (21) and back upholstery (22) which is rigidly arranged on the back upholstery carrier (21) ;
(c) a support structure for receiving forces which act on the vehicle seat;
wherein
(d) the support structure is formed as a rigid carrier frame (30) which is arranged at the peripheral side outside the seat member (10) and the backrest (20) and which is connected to the seat upholstery carrier (11) and the back upholstery carrier (21), and
(e) which has carrier rails (31, 32) which are arranged in pairs and which extend along opposing lateral edges (13, 23) of the seat member (10) and the backrest (20), and
(f) the carrier frame (30) is constructed as a hollow structure,
**characterized in that**
g1) a ventilation and/or heating element is integrated in the hollow structure of the carrier frame (30) and **in that** discharge openings of the ventilation and/or heating element are arranged at an inner side of the carrier frame (30) in such a manner that a heating and/or cooling of the backrest (20) or the seat member (10) is thereby enabled; and/or
g2) a cable guide for an illumination element which is arranged on the vehicle seat or for a charging device for electronic mobile devices is integrated in the hollow structure of the carrier frame (30).

2. Vehicle seat according to Claim 1, **characterized in that** the seat upholstery carrier (11) and/or the rear upholstery carrier (21) are each formed as a structural unit by means of an integral shell structure.

3. Vehicle seat according to any one of the preceding claims, **characterized in that**
(a) the carrier frame (30) is constructed as a closed frame which surrounds the seat member (10) and the backrest (20) at the peripheral side; and/or
(b) **in that** the carrier rails (31, 32) which are arranged in pairs each have a first horizontal portion (31) which is arranged at the peripheral side at the lateral edges (13) of the seat member (10), and have a second inclined portion (32) which is arranged at the peripheral side at the lateral edges (23) of the backrest (20), the second portion (32) being rigidly connected to the first portion (31) and an opening angle between the first portion and the second portion being in the range from 90° to 135°.

4. Vehicle seat according to any one of the preceding claims, **characterized in that** the carrier frame (30) is constructed in an integral manner.

5. Vehicle seat according to any one of the preceding claims, **characterized in that** the carrier frame (30) has in an upper end region (34) a shock-absorbing element for receiving impact energy.

6. Vehicle seat according to any one of the preceding claims, **characterized in that**
(a) the back upholstery carrier (21) is articulated so as to be able to be displaced along the carrier rails (32) which are arranged in pairs in order to adjust the inclination of the backrest (20); and/or
(b) **in that** for an adjustment of the seat member (10) the seat upholstery carrier (11) is articulated so as to be able to be displaced along the carrier rails (31); and/or
(c) **in that** the backrest (20) is coupled to the seat member (10) in a pivotably movable manner.

7. Vehicle seat according to any one of the preceding claims, **characterized in that** the backrest (20) can be adjusted in terms of inclination, the back upholstery carrier (21) being articulated to the carrier rails (32) by means of prismatic joints in order to adjust the inclination of the backrest (20).

8. Vehicle seat according to any one of the preceding claims, **characterized in that** the back upholstery carrier (21) is articulated in a guiding groove of the carrier rails (32) with a translational and rotational degree of freedom in order to adjust the inclination of the backrest (20).

9. Vehicle seat according to any one of the preceding claims, **characterized by** a headrest (40) which is rigidly connected to the carrier frame (30).

10. The vehicle seat according to Claim 9, **characterized in that** the vehicle seat (1) by adjusting the inclination of the backrest (20) can be moved from an upper seat position into a lower seat position in such a manner that the backrest (20) covers a part-region (43) of an inner face of the headrest (40) in the upper seat position and in the lower seat position the part-region (43) is exposed.

11. Vehicle seat according to Claim 9 or Claim 10, **characterized in that** the headrest has lateral sight screens for forming a lateral headrest and visually separating an adjacent person.

12. Vehicle seat according to any one of the preceding claims, **characterized in that** a table is arranged at a rear side of the vehicle seat (1) on the carrier frame (30) .

13. Vehicle seat according to any one of the preceding claims, **characterized by** a three-point safety belt and a belt redirection device which are secured to the carrier frame.

14. Vehicle seat according to any one of the preceding claims, **characterized in that**
(a) the carrier frame (30) is constructed as a hollow aluminium rod element; and/or
(b) **in that** the seat upholstery (10) and the backrest (20) comprise an upholstery cover.

15. Arrangement of vehicle seats, at least two of the vehicle seats (1) being arranged so as to be orientated with respect to each other according to any one of the preceding claims, the arranged vehicle seats being connected to each other by means of a horizontal connection element which is rigidly connected to the carrier frame (30) and/or which is fitted in a recess in a horizontal portion (31) of the carrier frame (30).

16. Arrangement of vehicle seats according to Claim 15, **characterized in that** one of the at least two vehicle seats (1) is supported so as to be able to be displaced along the horizontal connection element.

## Revendications

1. Siège de véhicule (1), en particulier siège de passager pour un bus, comprenant :
a) une partie de siège (10), comportant un support de coussin de siège (11) et un coussin de siège (12) qui est disposé rigidement sur le support de coussin de siège (11) ;
b) un dossier (20), comportant un support de coussin de dossier (21) et un coussin de dossier (22) qui est disposé rigidement sur le support de coussin de dossier (21) ;
c) une structure de support destinée à absorber des forces qui agissent sur le siège de véhicule ; dans lequel
d) la structure de support est formée en tant que cadre de support (30) rigide qui est disposé du côté périphérique à l'extérieur de la partie de siège (10) et du dossier (20) et qui est en liaison avec le support de coussin de siège (11) et le support de coussin de dossier (21) et
e) qui comprend des rails de support (31, 32) disposés par paires qui s'étendent le long de bords latéraux opposés (13, 23) de la partie de siège (10) et du dossier (20) et
f) le cadre de support (30) est réalisé sous forme de structure creuse,
caractérisé
g1) en ce qu'un élément d'aération et/ou de chauffage est intégré dans la structure creuse du cadre de support (30), et en ce que des ouvertures de sortie de l'élément d'aération et/ou de chauffage sont disposées sur un côté intérieur du cadre de support (30), de telle sorte qu'un réchauffement et/ou un refroidissement du dossier (20) respectivement de la partie de siège (10) soient ainsi rendus possibles ; et/ou
g2) en ce qu'un guide de câble pour un élément d'éclairage disposé sur le siège de véhicule ou pour un dispositif de charge pour des appareils mobiles électroniques est intégré dans la structure creuse du cadre de support (30).

2. Siège de véhicule selon la revendication 1, **caractérisé en ce que** le support de coussin de siège (11) et/ou le support de coussin de dossier (21) sont formés respectivement sous forme d'unité structurale au moyen d'une structure de coque d'une seule pièce.

3. Siège de véhicule selon l'une des revendications précédentes, **caractérisé**
a) **en ce que** le cadre de support (30) est réalisé sous forme de châssis fermé qui entoure du côté périphérique la partie de siège (10) et le dossier (20) ; et/ou
b) **en ce que** les rails de support (31, 32) disposés par paires comprennent respectivement une première partie horizontale (31) qui est disposée du côté périphérique au niveau des bords latéraux (13) de la partie de siège (10) et une deuxième partie inclinée (32) qui est disposée du côté périphérique au niveau des bords latéraux (23) du dossier (20), la deuxième partie (32) étant reliée rigidement à la première partie (31) et un angle d'ouverture entre la première partie et la deuxième partie étant situé dans la plage de 90° à 135°.

4. Siège de véhicule selon l'une des revendications précédentes, **caractérisé en ce que** le cadre de support (30) est formé d'une seule pièce.

5. Siège de véhicule selon l'une des revendications précédentes, **caractérisé en ce que** le cadre de support (30) comprend, dans une région d'extrémité supérieure (34), un élément absorbant les chocs pour l'absorption d'une énergie d'impact.

6. Siège de véhicule selon l'une des revendications précédentes, **caractérisé**
a) **en ce que** le support de coussin de dossier (21) est articulé de manière déplaçable le long des rails de support (32) disposés par paires pour le réglage de l'inclinaison du dossier (20) ; et/ou
b) **en ce que** le support de coussin de siège (11) est articulé de manière déplaçable le long des rails de support (31) pour un réglage de la partie de siège (10) ; et/ou
c) **en ce que** le dossier (20) est accouplé à la partie de siège (10) de manière mobile en pivotement.

7. Siège de véhicule selon l'une des revendications précédentes, **caractérisé en ce que** le dossier (20) est d'inclinaison réglable, le support de coussin de dossier (21) étant articulé sur les rails de support (32) par le biais d'articulations à glissière pour le réglage de l'inclinaison du dossier (20).

8. Siège de véhicule selon l'une des revendications précédentes, **caractérisé en ce que** le support de coussin de dossier (21) est articulé dans une rainure de guidage des rails de support (32) avec un degré de liberté en translation et un degré de liberté en rotation pour le réglage de l'inclinaison du dossier (20).

9. Siège de véhicule selon l'une des revendications précédentes, **caractérisé par** un appuie-tête (40) qui est disposé rigidement sur le cadre de support (30).

10. Siège de véhicule selon la revendication 9, **caractérisé en ce que** le siège de véhicule (1) peut être amené d'une position de siège supérieure à une position de siège inférieure par un réglage de l'inclinaison du dossier (20), de telle sorte que le dossier (20) recouvre une région partielle (43) d'une surface intérieure de l'appuie-tête (40) dans la position de siège supérieure et que la région partielle (43) soit dégagée dans la position de siège inférieure.

11. Siège de véhicule selon la revendication 9 ou 10, **caractérisé en ce que** l'appuie-tête comprend des caches latéraux pour réaliser un appuie-tête latéral et une séparation visuelle vis-à-vis d'un occupant d'un siège voisin.

12. Siège de véhicule selon l'une des revendications précédentes, **caractérisé en ce qu'**une table est disposée sur le cadre de support (30) sur un côté arrière du siège de véhicule (1).

13. Siège de véhicule selon l'une des revendications précédentes, **caractérisé par** une ceinture de sécurité à 3 points et un dispositif de déviation de ceinture qui sont fixés au cadre de support.

14. Siège de véhicule selon l'une des revendications précédentes, **caractérisé**
a) **en ce que** le cadre de support (30) est réalisé sous forme d'élément de barre en aluminium de forme creuse ; et/ou
b) **en ce que** le coussin de siège (10) et le dossier (20) comportent une housse de coussin.

15. Ensemble de sièges de véhicule, dans lequel au moins deux des sièges de véhicule (1) selon l'une des revendications précédentes sont disposés de manière orientée les uns par rapport aux autres, dans lequel les sièges de véhicule disposés sont reliés les uns aux autres par le biais d'un élément de liaison horizontal qui est relié rigidement au cadre de support (30) et/ou qui est ajusté dans un évidement dans une partie horizontale (31) du cadre de support (30).

16. Ensemble de sièges de véhicule selon la revendication 15, **caractérisé en ce que** l'un desdits au moins deux sièges de véhicule (1) est monté de manière déplaçable le long de l'élément de liaison horizontal.
